# EUROPEAN PATENT SPECIFICATION

(11) **EP 3 056 473 B1**
(45) Date of publication and mention of the grant of the patent: **11.03.2020**
(21) Application number: 13895133.0
(22) Date of filing: 11.10.2013
(51) Int. Cl.: C02F 5/02, A47K 3/00, C02F 5/00, F24H 1/00, F24D 17/00, F24D 19/00, F28G 9/00, F28D 20/00, F28F 19/01, C02F 1/46, C02F 1/36, C02F 1/52, C02F 1/66, C02F 103/42

(54) **WATER TREATMENT DEVICE AND HOT-WATER SUPPLY DEVICE**
WASSERBEHANDLUNGSVORRICHTUNG UND HEISSWASSERVERSORGUNGSVORRICHTUNG
DISPOSITIF DE TRAITEMENT D'EAU ET DISPOSITIF D'ALIMENTATION EN EAU CHAUDE

(43) Date of publication of application: 17.08.2016
(73) Proprietor: Mitsubishi Electric Corporation, Tokyo 100-8310 (JP)
(72) Inventor: ORITO, Mari, Tokyo 100-8310 (JP); TAKEUCHI, Shiro, Tokyo 100-8310 (JP)
(74) Representative: Pfenning, Meinig & Partner mbB
(86) International application number: PCT/JP2013/077796
(87) International publication number: WO 2015/052840

(56) References cited:
- JP-A- H02 187 107
- JP-A- H09 173 804
- JP-A- S63 302 910
- JP-A- 2001 120 918
- JP-A- 2012 251 687
- JP-A- 2012 523 316
- JP-U- 3 143 158
- KR-A- 20090 104 791
- JUN-HWAN BANG ET AL: "Precipitation of calcium carbonate by carbon dioxide microbubbles", CHEMICAL ENGINEERING JOURNAL, ELSEVIER SEQUOIA, LAUSANNE, CH, vol. 174, no. 1, 2 September 2011 (2011-09-02), pages 413-420, XP028312432, ISSN: 1385-8947, DOI: 10.1016/J.CEJ.2011.09.021 [retrieved on 2011-09-10]

## Description

The present invention relates to a water treatment device and a heating apparatus comprising the water treatment device.

### Background

Generally, in facilities that deal with water such as water storage tanks and pipings, scale components such as calcium and magnesium dissolved in water are deposited in the form of scale and the deposited scale is prone to adhere to the facilities. As examples of conventional techniques for dealing with the scale, as indicated in Patent Literatures 1 to 4, methods in which carbon dioxide is supplied into water have been proposed.

More specifically, in the conventional technique described in Patent Literature 1, carbon dioxide is supplied by a water treatment device to a facility, for example, such as a water tank. Consequently, scale components in the water tank are deposited in the form of carbonate compounds as a result of reaction with the carbon dioxide and thus can be isolated and removed. Also, in the other conventional techniques described in Patent Literatures 2 and 3, microbubbles of carbon dioxide are injected into water to be treated, to lower the pH of the water. Consequently, in the other conventional techniques, the solubility of scale components in water is maintained high, whereby scale deposition is restrained. Patent Literature 4 discloses a water treatment device capable for isolating deposited scale and comprising a water intake circuit, a gas supply section, a scale isolation section and cleaning means.

### Citation List

Patent Literature 1: Japanese Patent Laid-Open No. 10-174979
Patent Literature 2: Japanese Patent Laid-Open No. 2010-78239
Patent Literature 3: Japanese Patent Laid-Open No. 2010-223525
Patent Literature 4: JP 2012 523316 A

### Summary

### Technical Problem

However, in the conventional technique described in Patent Literature 1, carbon dioxide is supplied to a water tank, which is a part of a facility with a water treatment device installed therein, and thus, scale generated as a result of the carbon dioxide supply may adhere to a wall surface of the water tank. In other words, this conventional technique has the problem of being unable to sufficiently protect the facility with the water treatment device installed therein from scale. In particular, in a facility that makes high-temperature water flow through a heat exchanger such as a hot-water supply device, scale is easily deposited inside the heat exchanger and the pipings, which have a high hot water supply efficiency due to, e.g., decrease in performance of the heat exchanger and/or clogging of the pipings.

Also, in the other conventional techniques described in Patent Literatures 2 and 3, scale deposition is restrained by lowering the pH of water. Thus, if the pH of the water varies depending on, e.g., the quality of the water from the water source or the temperature of the water increases according to, e.g., an ambient temperature environment, even though carbon dioxide is injected into the water, scale may be deposited. In other words, the aforementioned other conventional techniques have the problem of difficulty in stable restraint of scale deposition.

The present invention has been made to solve the aforementioned problems, and an object of the present invention is to provide a water treatment device and a heating apparatus that enable efficient removal of scale components in water at a part that is different from a facility to be protected from scale and enables stable restraint of adherence of scale to the facility.

### Solution to Problem

A water treatment device of the invention comprises a water intake circuit that takes water out from a facility storing water and returns the water to the facility, the water intake circuit allowing the water stored in the facility to circulate therethrough, a water intake pump configured to make the water circulate through the water intake circuit, a gas supply section that supplies a gas containing carbon dioxide to the water flowing in the water intake circuit and lowers a pH of the water, and a scale isolation section that is provided on a downstream side of the gas supply section in a direction of the flow of the water in the water intake circuit and isolates scale deposited in the water flowing in the water intake circuit as a result of the supply of the gas, determination means for determining whether or not cleaning processing for cleaning the scale accumulated in the scale isolation section is necessary; cleaning means for, if the determination means determines that the cleaning processing is necessary, performing the cleaning processing, a channel changeover valve connected to a tank connecting portion and a water discharging piping, the channel changeover valve being configured to switch a channel of water that has flown out from the scale isolation section, to either of the tank connection portion and the water discharge piping, and a control device connected with the determination means, the gas supply section, the water intake pump and the channel changeover valve, characterized in that the cleaning means includes the gas supply section and the control device is configured to control the scale cleaning processing so that, while the cleaning processing is being performed, the gas supply section supplies the gas containing carbon dioxide to water flowing into the scale isolation section so as to re-dissolve the scale accumulated in the scale isolation section, wherein an amount of carbon dioxide, which is supplied from the gas supply section into the water, is increased compared to an amount of carbon dioxide during a descaling treatment, wherein, in the water intake circuit, a scale reaction section for making the water flowing in the water intake circuit and the gas react with each other to deposit scale in the water, the scale reaction section being disposed between the gas supply section and the scale isolation section, is provided, and wherein the gas supplied from the gas supply section is introduced into the water intake circuit via a microbubble generation device that makes a gas into microbubbles.

### Advantageous Effects of Invention

The present invention enables efficient removal of scale components contained in water to be treated by a facility. Consequently, adherence and accumulation of scale in a part that is necessary for maintenance of a function of the facility, that is, a part to be protected from scale, can be restrained. Accordingly, the function of the facility can stably be fulfilled.

### Brief Description of Drawings

[Figure 1] Figure 1 is an overall configuration diagram illustrating a hot-water supply device with a water treatment device according to Embodiment 1 of the present invention installed therein.
[Figure 2] Figure 2 is an enlarged major part view illustrating the water treatment device in Figure 1 in close-up.
[Figure 3] Figure 3 includes perspective views illustrating specific examples (a) and (b) of a scale reaction section according to Embodiment 1 of the present invention.
[Figure 4] Figure 4 includes perspective views of specific examples (a), (b) and (c) of a scale isolation section according to Embodiment 1 of the present invention.
[Figure 5] Figure 5 is a characteristic line diagram schematically indicating a relationship between reaction efficiency for calcium in water and bubble diameter in Embodiment 1 of the present invention.
[Figure 6] Figure 6 is an enlarged major part view illustrating a first alteration of Embodiment 1 of the present invention in which a bubble breaking device is installed in a water treatment device.
[Figure 7] Figure 7 is an enlarged major part view illustrating a second alteration of Embodiment 1 of the present invention in which a cleaning liquid supply device is installed in a water treatment device.
[Figure 8] Figure 8 is an enlarged major part view of a third alteration of Embodiment 1 of the present invention in which an ultrasonic shaking device is installed in a water treatment device.

### Description of Embodiments

### Embodiment 1

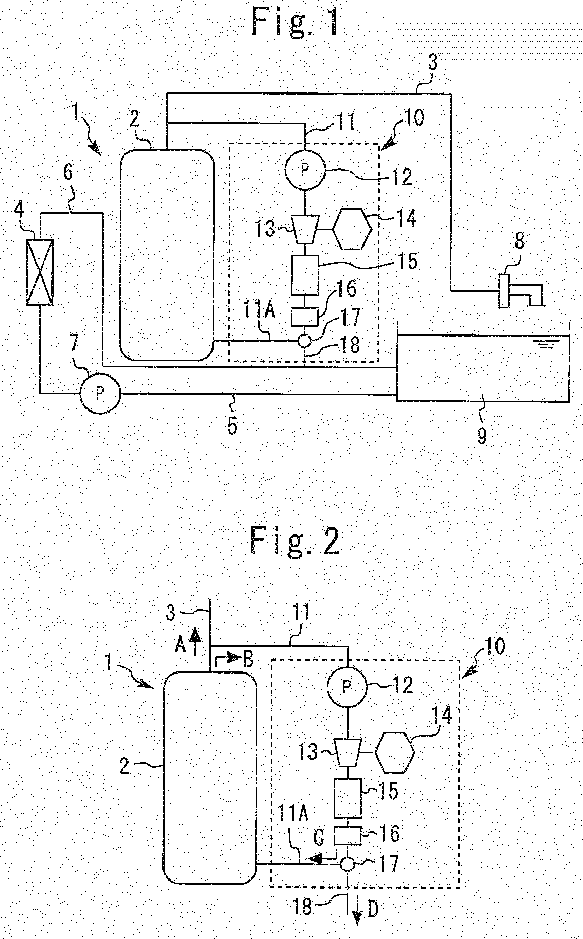

Embodiment 1 of the present invention will be described below with reference to Figures 1 to 5. In the drawings used in the present description, elements that are common to the drawings are provided with a same reference numeral, and overlapping descriptions thereof will be omitted. Figure 1 is an overall configuration diagram illustrating a hot-water supply device with a water treatment device according to Embodiment 1 of the present invention installed therein.

As illustrated in Figure 1, a hot-water supply device 1 includes, e.g., a hot-water storage tank 2 and a hot water supply piping 3. The hot-water storage tank 2 is a tank for storing hot water, and high-temperature water heated by a non-illustrated heating device is added to the upper side of the hot-water storage tank 2. Also, low-temperature water is added from a water source to the lower side of the hot-water storage tank 2 via, e.g., a non-illustrated water supply piping. Consequently, in the hot-water storage tank 2, temperature stratification is formed in such a manner that the high-temperature water is retained on the upper side and the low-temperature water is retained on the lower side. Here, the hot-water storage tank 2 corresponds to a facility that deals with water.

The hot water supply piping 3 is configured to supply hot water to hot water faucets 8 (only one of which is illustrated) disposed in respective sites of a house. One end side of the hot water supply piping 3 is connected to an upper portion of the hot-water storage tank 2, and another end side of the hot water supply piping 3 is connected to the hot water faucets 8. Also, a mixing valve (not illustrated) for mixing low-temperature water into high-temperature water taken out from the upper portion of the hot-water storage tank 2 is connected to the hot water supply piping 3. Consequently, hot water adjusted to have an appropriate temperature by the mixing valve is supplied to the water faucets 8 via the hot water supply piping 3.

Also, in order to heat (reheat) bath water stored in a bathtub 9, the hot-water supply device 1 includes, e.g., a heat exchanger 4, a reheating supply piping 5, a reheating return piping 6 and a reheating pump 7. The heat exchanger 4 is configured to heat the bath water using the high-temperature water stored in the hot-water storage tank 2 or the high-temperature water heated by the heating device and is configured in such a manner that such high-temperature water is supplied to a primary-side channel of the heat exchanger 4. A secondary-side channel of the heat exchanger 4 is connected to the bathtub 9 via the reheating supply piping 5 and the reheating return piping 6. Consequently, the heat exchanger 4 heats the bath water by means of heat exchange between the high-temperature water supplied to the primary-side channel and the bath water flowing in the secondary-side channel.

The reheating supply piping 5 is configured to make the bath water that has flown out from the bathtub 9 flow into the secondary-side channel of the heat exchanger 4, and the reheating return piping 6 is configured to return the bath water that has flown out from the secondary-side channel of the heat exchanger 4 to the bathtub 9. The reheating supply piping 5 and the reheating return piping 6 form a reheating piping that circulates the bath water between the secondary-side channel of the heat exchanger 4 and the bathtub 9. In the reheating supply piping 5, a reheating pump 7 for performing the circulation of the bath water is provided. Here, the reheating pump 7 may be provided in the reheating return piping 6.

Next, basic operation of the hot-water supply device 1 will be described. First, when a user operates a hot water faucet 8, high-temperature water stored in the hot-water storage tank 2 flows out to the hot water supply piping 3, and the high-temperature water is mixed with low-temperature water by the mixing valve. Here, a ratio of the high-temperature water and the low-temperature water mixed by the mixing valve is controlled by, e.g., a control device (not illustrated) installed in the hot-water supply device 1. Consequently, a temperature of hot water flowing in the hot water supply piping 3 is adjusted to, for example, a hot water supply temperature set in advance by the user, and the hot water is supplied from the hot water supply piping 3 to the hot water faucet 8.

Also, when the user conducts an operation to reheat the bath water, the control device performs reheating operation. In this case, the control device drives the reheating pump 7 and also supplies high-temperature water to the primary-side channel of the heat exchanger 4. Consequently, the bath water flowing in the secondary-side channel of the heat exchanger 4 is heated by the heat exchanger 4 and then returned to the bathtub 9, whereby the bath water in the bathtub 9 is heated. When the high-temperature water in the hot-water storage tank 2 is decreased as a result of the above-described hot water supply operation or reheating operation, the control device performs heating operation. In the heating operation, low-temperature water taken out from the lower side of the hot-water storage tank 2 is heated by the heating device and high-temperature water obtained as a result of the heating is returned to the upper portion of the hot-water storage tank 2, whereby the water in the hot-water storage tank 2 is heated.

Next, a water treatment device 10 included in the hot-water supply device 1 will be described with reference to Figures 1 and 2. Figure 2 is an enlarged major part view illustrating the water treatment device in Figure 1 in close-up. The water treatment device 10 is configured to remove scale components in hot water stored in the hot-water storage tank 2. In the below description, scale components mean hard components such as calcium ions and magnesium ions dissolved in water, and scale means, e.g., calcium carbonate and magnesium carbonate, which are carbonate compounds in the hard components.

In the hot-water supply device 1, in particular, when water containing a large amount of scale components such as well water is used for water to be supplied as hot water, scale is deposited and easily adheres to, e.g., an inner wall surface of the hot-water storage tank 2. Also, scale also easily adheres to, e.g., the insides of the hot water supply piping 3, the heat exchanger 4, the reheating supply piping 5 and the reheating return piping 6 through which high-temperature water flows. The water treatment device 10 is configured to restrain adherence of scale to facilities necessary for maintenance of a function of the hot-water supply device 1, e.g., a facility to be protected from scale. As illustrated in Figures 1 and 2, the water treatment device 10 includes, e.g., a water intake piping 11, a water intake pump 12, a gas supply section 13, a gas container 14, a scale reaction section 15, a scale isolation section 16, a channel changeover valve 17 and a water discharge piping 18.

The water intake piping 11 provides a water intake circuit that takes water from the hot-water storage tank 2 and returns the water to the hot-water storage tank 2, jointly with the water intake pump 12. The water intake pump 12 is configured to make hot water stored in the hot-water storage tank 2 circulate through the water intake piping 11. One end side (upstream side) of the water intake piping 11 is connected to the upper portion of the hot-water storage tank 2. Although Figures 1 and 2 illustrate a case where the upstream side of the water intake piping 11 is connected to the upper portion of the hot-water storage tank 2 via the hot water supply piping 3, the upstream side of the water intake piping 11 may be connected directly to the upper portion of the hot-water storage tank 2.

Another end side (downstream side) of the water intake piping 11 is connected to the lower portion side of the hot-water storage tank 2. In the below description, a part of the water intake piping 11, the part being positioned on the downstream side relative to the channel changeover valve 17, is referred to as a tank connection portion 11A. In other words, the tank connection portion 11A interconnects the channel changeover valve 17 and the lower side of the hot-water storage tank 2. Here, the tank connection portion 11A may be connected to the lower side of the hot-water storage tank 2 via another piping installed in the hot-water supply device 1. In the water intake piping 11, the water intake pump 12, the gas supply section 13, the scale reaction section 15, the scale isolation section 16 and the channel changeover valve 17 are provided in this order from the upstream side along a water flow direction.

The gas supply section 13 is connected to the gas container 14 in which, for example, a gas containing carbon dioxide is stored, and is configured to supply the gas in the gas container 14 into water flowing in the water intake piping 11. In the below description, "gas" means a gas containing carbon dioxide. The gas supply section 13 includes a microbubble generation device (not illustrated) that makes the gas into microbubbles. The gas supplied from the gas supply section 13 is mixed into the water in the form of microbubbles each having a diameter of, for example, no more than 10 µm, preferably no more than 1 µm, made by the microbubble generation device. In particular, where microbubbles each having a diameter of no more than 1 µm are formed, e.g., bubble combination in which bubbles are combined in the water into large bubbles is less likely to occur, enabling stable maintenance of microbubbles that easily react with scale components. Here, the gas supplied by the gas supply section 13 may be atmospheric air that originally contains carbon dioxide or a high-concentration gas having a carbon dioxide concentration that is higher than that of atmospheric air.

As specific means for making carbon dioxide into microbubbles by means of the gas supply section 13, for example, a pressurization-depressurization method in which the gas is dissolved in water under a high pressure and then the pressure is reduced to make gas in the water into bubbles may be used. Also, a gas-liquid shearing method in which a swirling flow of water is formed and a gas is caught in the swirling flow to shear or break up the gas into bubbles may be used. In the gas-liquid shearing method, for example, water is swirled at a high speed of no less than 400 times/minute by a structure such as blades to, while a gas containing carbon dioxide being drawn into the swirling flow, cut or break up the gas to produce microbubbles.

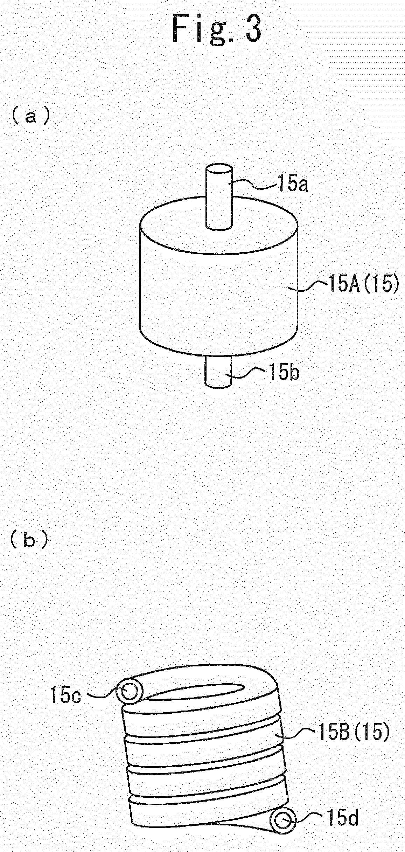

The scale reaction section 15 is a part in which the microbubbles of the gas supplied by the gas supply section 13 and scale components in the water flowing in the water intake piping 11 react with each other, and can efficiently deposit fine particles of scale in the water. The scale reaction section 15 is disposed between the gas supply section 13 and the scale isolation section 16. Figure 3 includes perspective views illustrating specific examples (a) and (b) of a scale reaction section according to Embodiment 1 of the present invention. First, Figure 3(a) illustrates a reaction tank 15A, which is an example of the scale reaction section 15. The reaction tank 15A includes, for example, a cylindrical container, and connection ports 15a and 15b to be connected to the upstream side and the downstream side of the water intake piping 11, respectively, are provided at respective end surface in an axial direction thereof.

The reaction tank 15A has a shape providing a diameter-increased part at an intermediate part of the water intake piping 11 when the reaction tank 15A is connected to the water intake piping 11. In other words, the reaction tank 15A has a dimension that is larger than that of the channel of the water intake piping 11 in a radial direction of the water intake piping 11. Consequently, the reaction tank 15A can temporarily retain a water-gas mixture flowing in the water intake piping 11 on the upstream side of the scale isolation section 16 to promote scale deposition by means of reaction between water and carbon dioxide.

Here, if processing for promoting scale deposition with a fixed amount of water and gas temporarily enclosed in the reaction tank 15A (what is called batch processing) is performed, a shutoff valve such as a solenoid valve may be provided to each of the connection ports 15a and 15b to temporarily stop a water flow. Also, a volume of the reaction tank 15A is preferably smaller than that of the hot-water storage tank 2. This is because it is meaningless for the reaction tank 15A has a water throughput that is equal to or larger than that of the hot-water storage tank 2 and in addition, as the volume of the reaction tank 15A is smaller, the number of microbubbles of carbon dioxide retained inside the reaction tank 15A increases and thus the scale deposition reaction is more promoted.

On the other hand, Figure 3(b) illustrates a reaction channel 15B, which is an example of the scale reaction section 15. The reaction channel 15B is formed as a helically-curved channel, and on the respective end portion sides of the channel, connection ports 15c and 15d to be connected to the upstream side and the downstream side of the water intake piping 11, respectively, are provided. It is necessary to design the reaction channel 15B so as to have a channel diameter that is large enough to prevent the channel from being occluded by deposited scale. The reaction channel 15B enables a long period of reaction time in which water and carbon dioxide flow while being mixed to be secured even though the volume of the scale reaction section 15 is small, enabling promotion of scale deposition.

Although the scale reaction section 15 is not essential for the present invention, it is comprised by the water treatment device according to the invention. As a reference example, if the water intake piping 11 can provide a channel having a sufficient length between the gas supply section 13 and the scale isolation section 16, the channel itself serves as a scale reaction section, eliminating the need to use a dedicated part that serves as a scale reaction section. Also, in the present invention, as the scale reaction section 15, one obtained by connecting the reaction tank 15A and the reaction channel 15B may be used. Also, since scale deposited in water is easily accumulated in the scale reaction section 15, it is preferable not to dispose a heat source or the like in the vicinity of the scale reaction section 15 to avoid excessive scale deposition. However, if the scale reaction section 15 is disposed close to a heat source because of, e.g., design constraints, it is preferable to take measures such as adjusting the amount of carbon dioxide supplied by the gas supply section 13 and/or frequently performing later-described scale cleaning processing.

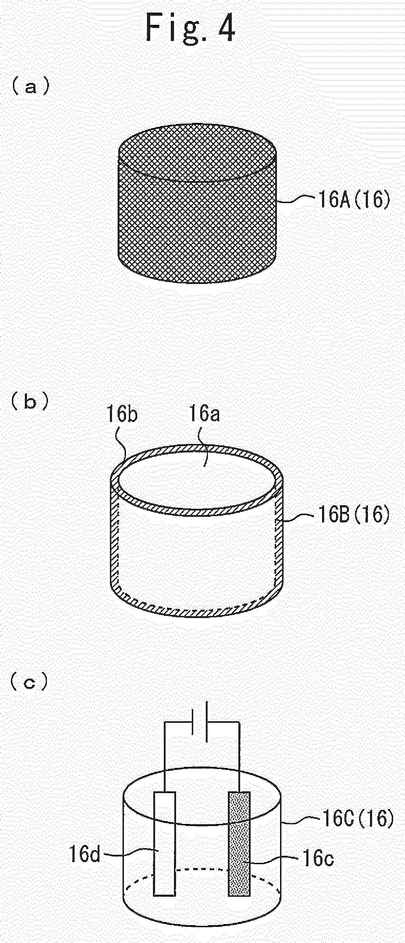

The scale isolation section 16 is configured to make fine particles of scale deposited in water as a result of reaction on the downstream side of the gas supply section 13, in particular, reaction in the scale reaction section 15, grow into large particles and isolate and remove the particles from the water. The scale isolation section 16 is provided on the downstream side of the gas supply section 13 in the water intake piping 11. Figure 4 includes perspective views of specific examples (a), (b) and (c) of a scale isolation section according to Embodiment 1 of the present invention.

First, a filter 16A, which is illustrated in Figure 4(a), has a filter structure and filters out scale particles contained in water. Also, a heating separator 16B, which is illustrated in Figure 4(b), includes a channel 16a to be connected to the water intake piping 11, and a ring-like heater 16b that is disposed so as to surround the channel 16a and heats water flowing in the channel 16a. The heating separator 16B is configured to promote scale deposition by means of the heater 16b heating water, using the characteristic of the solubility of scale components decreasing as the water temperature increases.

Also, an electrode reactive separator 16C, which is illustrated in Figure 4(c), includes, for example, a pair of electrodes 16c and 16d and is configured to apply a voltage between the electrodes 16c and 16d and thereby promote scale deposition. In general, deposition of scale such as calcium carbonate is promoted in an alkaline solution. Therefore, in the electrode reactive separator 16C, for example, the polarities of the voltage is set as illustrated in the figure, and an alkaline area is formed around the electrode 16d, which serves as a cathode, and scale deposition can be promoted in this area.

Although Figure 4 illustrates three types of devices including the filter 16A, the heating separator 16B and the electrode reactive separator 16C as examples of the scale isolation section 16, in the present invention, one scale isolation section 16 may be provided by combining two or three devices of the three types of devices. In this case, it is preferable to dispose the filter 16A, which delivers high scale isolation performance, on the downstream-most side of the devices to be combined. Also, in the present invention, an outer enclosure of the scale isolation section 16 may be formed by, for example, a large-diameter water tank that is similar to the reaction tank 15A.

The electrode reactive separator 16C illustrated in Figure 4(c) indicates an example in which two electrodes 16c and 16d are disposed in a channel for water. However, the present invention is not limited to this example, and for example, it is possible that an electrode that serves as an anode is disposed at a center of a cylindrical channel and a cathode-side electrode is formed by a peripheral wall of the channel. Also, it is not necessary to specifically determine the center or the peripheral wall to be used as an anode; however, since an alkaline area is formed around a cathode and scale is deposited in the alkaline area, it is preferable to use the peripheral wall, which has a larger area, as a cathode. Furthermore, the scale isolation section 16 may be configured to allow batch processing. In batch processing, a fixed amount of water containing scale is temporarily enclosed in the scale isolation section 16, and scale isolation and removal are promoted in this state.

Next, the channel changeover valve 17 and the water discharge piping 18 included in water discharging means in the present embodiment will be described with reference to Figures 1 and 2. The water discharging means is configured to, when the later-described scale cleaning processing is performed, discharge water that has flown out from the scale isolation section 16 to the outside without returning the water to the hot-water storage tank 2, and in the present embodiment, the reheating return piping 6 is indicated as an example of a destination of discharge of the water.

The channel changeover valve 17 is configured to switch a channel of water that has flown out from the scale isolation section 16, to either of the tank connection portion 11A and the water discharge piping 18. The channel changeover valve 17 includes, e.g., an electromagnetically-driven three-way valve, and includes one inlet port and two outlet ports. The inlet port of the channel changeover valve 17 is connected to the water intake piping 11 on the downstream side of the scale isolation section 16. Also, one outlet port of the two outlet ports is connected to the lower side of the hot-water storage tank 2 via the tank connection portion 11A of the water intake piping 11, and the other outlet port is connected to the reheating return piping 6 via the water discharge piping 18.

The water treatment device 10 configured as described above is controlled by the control device in the hot-water supply device 1. In other words, the control device in the hot-water supply device 1 is configured so as to control, e.g., the water intake pump 12, the gas supply section 13 and the channel changeover valve 17 in the water treatment device 10. In the present invention, the control device in the hot-water supply device 1 does not necessarily need to double as a control device for the water treatment device 10, and a dedicated control device that controls the water treatment device 10 may be installed.

### (Descaling treatment)

Next, operation of the water treatment device 10 according to the present embodiment will be described. First, the water treatment device 10 can perform descaling treatment for removing scale components contained in water in the hot-water storage tank 2. In the descaling treatment, in Figure 2, the downstream side of the water intake piping 11 is connected to the hot-water storage tank 2 by the channel changeover valve 17, and in this state, the water intake pump 12 and the gas supply section 13 are driven. Here, the water discharge piping 18 is disconnected from the water intake piping 11 by the channel changeover valve 17. Upon actuation of the water intake pump 12, hot water is taken out from the upper portion of the hot-water storage tank 2, and the hot water does not flow in the arrow A direction unlike time of hot water supply, but flows in the arrow B direction and flows through the water intake piping 11. Then, the hot water flows in the arrow C direction via the channel changeover valve 17 and returns to the hot-water storage tank 2, and thus circulates through the water intake piping 11.

Also, first, microbubbles of a gas containing carbon dioxide are mixed from the gas supply section 13 into the water circulating in the water intake piping 11, and the water containing the microbubbles flow through the scale reaction section 15. Consequently, in the channel including the scale reaction section 15, as indicated in the reaction formula in Formula 1 below, reaction between scale components and carbon dioxide in the water progresses and thereby fine particles of scale are deposited and the deposited fine particles grow into large particles. Then, the scale particles reach the scale isolation section 16, and are removed by the scale isolation section 16. The below reaction formula is one indicating a calcium ion as an example of a scale component.

[Formula 1] Ca²⁺+Co₃²⁻ → CaCo₃

For a specific example, where the scale isolation section 16 is the filter 16A, the scale particles in the water can be removed by means of filtration. Also, where the scale isolation section 16 is the heating separator 16B or the electrode reactive separator 16C, in the scale isolation section 16, an area in which water is heated or an alkaline area exists and thus the scale particles grow into even larger particles in such area. Accordingly, scale can easily be removed by means such as precipitation or filtration.

In particular, where the scale isolation section 16 is the heating separator 16B, with increase in water temperature, substances (elements, atoms and molecules) enter a high-energy state, increasing the probability of collision, that is, the frequency of reaction, between the substances. Therefore, a reaction to generate carbonate compounds from scale components, which is ions in water, can efficiently be progressed. From such perspective, in the present invention, where the heating separator 16B is used as the scale isolation section 16, a configuration in which the scale reaction section 15 and the heating separator 16B are integrated as a same device so as to heat, for example, a peripheral wall of the reaction tank 15A and the reaction channel 15B may be employed. Also, in the present invention, a configuration in which the scale reaction section 15 and the electrode reactive separator 16C are integrated as a same device so as to dispose, for example, the electrodes 16c and 16d inside the reaction tank 15A and the reaction channel 15B may be employed.

The water softened by the scale isolation section 16 in such a manner as described above reaches the channel changeover valve 17 and returns to the lower side of the hot-water storage tank 2 via the tank connection portion 11A of the water intake piping 11. Here, in the scale isolation section 16, scale isolated from the water is accumulated. Therefore, the descaling treatment enables removal of scale components from the water in the hot-water storage tank 2. Here, where later-described scale cleaning processing is performed, water that has flowed out from the scale isolation section 16 flows into the water discharge piping 18 via the channel changeover valve 17 without the water being returned to the hot-water storage tank 2.

In the above-described descaling treatment, a method in which the scale reaction efficiency in the scale reaction section 15 is enhanced by, for example, increasing the temperature of the carbon dioxide gas supplied from the gas supply section 13 is effective. Scale such as calcium carbonate has a tendency to be more easily deposited as the temperature is higher, and thus, increasing the temperature of the gas supplied enables enhancement of the reaction efficiency. For a specific example, a heater that heats a gas may be provided in a gas channel extending from the gas container 14 to the gas supply section 13.

Also, where the water treatment device 10 is employed in the hot-water supply device 1, a configuration in which the gas supply section 13 or the gas container 14 is disposed at a position to which heat from hot water in the hot-water storage tank 2 is transferred, preferably, in the vicinity of the upper portion of the hot-water storage tank 2 may be employed. With this configuration, heat in the hot-water storage tank 2 is used to efficiently heat the carbon dioxide gas without using, e.g., a dedicated heater, enabling scale reaction efficiency enhancement. Also, a heater may be provided to the scale reaction section 15 or the scale reaction section 15 may be provided in the vicinity of the upper portion of the hot-water storage tank 2 to increase the temperature of the water in the water intake piping 11 using heat of the hot-water storage tank 2. These methods enable efficient increase in temperature of the water in the water intake piping 11 or temperature of the carbon dioxide gas without using dedicated heating means including, e.g., a heater, and thus enable scale reaction efficiency enhancement.

On the other hand, for enhancement in scale reaction efficiency, a method in which the water to be treated is alkalized (increase the pH of the water) is also effective. Upon alkalization of the water, the amount of charge in microbubbles of the carbon dioxide gas increases, and this makes combination of the bubbles difficult, resulting in stable existence of the microbubbles. Consequently, in, e.g., the scale reaction section 15, the efficiency of reaction between the scale components in the water and carbon dioxide is increased, enabling stable scale deposition. More specifically, an alkaline atmosphere can be formed by adding a reagent for pH adjustment or providing electrodes in water and applying electric current to the electrodes. However, if the scale reaction efficiency is enhanced by a method such as heating or alkalization, it is necessary to design the water channel so as to have, e.g., a size and a shape that prevent the channel from being occluded as a result of accumulation of scale deposited in the scale reaction section 15.

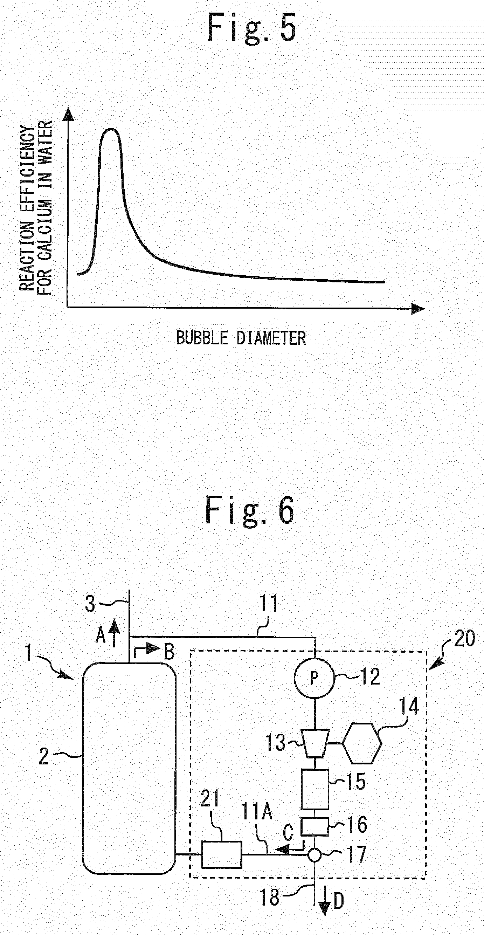

Also, for scale reaction efficiency enhancement, a method in which bubbles of a gas containing carbon dioxide are made into microbubbles is effective. Figure 5 is a characteristic line diagram schematically indicating a relationship between reaction efficiency for calcium in water and bubble diameter in Embodiment 1 of the present invention. As indicated in this figure, as bubbles of the carbon dioxide gas are finer, the scale reaction efficiency (in this case, the efficiency of reaction caused by calcium is indicated as an example) is more enhanced. This is attributable to the characteristic that as the bubbles are finer, the surface area of the bubbles in which the gas and the liquid are in contact with each other, that is, the area of reaction between carbon dioxide and scale components is larger. Also, this is attributable to promotion of transfer of carbon dioxide into the water by means of pressure of the bubbles onto the water.

However, if the bubbles are made to be excessively finer, carbon dioxide is excessively dissolved in the water and the water quality is thus biased toward the acidic side, resulting in occurrence of a phenomenon of scale, which is a deposited carbonate compound, being re-dissolved (see the left end portion of the characteristic line indicated in Figure 5). In consideration of these points, the diameter of bubbles of a gas supplied from the gas supply section 13 is preferably, for example, no more than 1 µm and set to be a size that prevents excessively dissolution of carbon dioxide in water. Consequently, combination of bubbles is restrained, enabling scale reaction efficiency enhancement while individual microbubbles being maintained.

### (Bubble breaking device)

Although microbubbles are effective for scale deposition as described above, upon the microbubbles flowing into the hot-water storage tank 2, scale may be deposited, e.g., inside the hot-water storage tank 2 and a hot water supply destination. Thus, as a first alteration, which is illustrated in Figure 6, a bubble breaking device 21, which serves as bubble breaking means for breaking microbubbles contained in water that has flowed out from a scale isolation section 16 may be installed in a water treatment device 20. Figure 6 is an enlarged major part view illustrating a first alteration of Embodiment 1 of the present invention in which a bubble breaking device is installed in a water treatment device.

The bubble breaking device 21 is controlled by a control device, and is disposed in, for example, a tank connection portion 11A, which is a part of a water intake piping 11, the part allowing descaled water to be returned to a hot-water storage tank 2. Also, specific examples of the bubble breaking device 21 include, e.g., an ultrasound generation device that generates ultrasound and breaks microbubbles by means of pressure of the ultrasound and a temperature adjustment device that breaks microbubbles by means of a high temperature. In the above-described first alteration, water containing microbubbles of a carbon dioxide gas is returned from the water treatment device 20 to the hot-water storage tank 2, enabling restraint of deposition of scale in the tank. Also, hot water containing microbubbles is supplied from the hot-water storage tank 2 to the outside, enabling deposition of scale in, e.g., pipings and a heat exchanger.

### (Scale cleaning processing)

Next, scale cleaning processing in the water treatment device 10 will be described. Scale cleaning processing is cleaning processing for cleaning scale accumulated in the scale isolation section 16 to remove the scale. The control device first performs determination processing for determining whether or not scale cleaning processing is necessary, at a timing of descaling treatment such as described above being not performed. The determination processing is performed based on a signal output from, for example, a scale detector (not illustrated) provided to the scale isolation section 16, and if an amount of scale accumulated in the scale isolation section 16 exceeds an upper-limit determination value set in advance, it is determined that scale cleaning processing is necessary.

Here, the scale detector is configured to detect an amount of scale accumulated in the scale isolation section 16 and output a signal corresponding to the accumulated amount to the control device. Also, in the determination processing, it is not necessarily required to use the scale detector. In other words, in the determination processing, for example, it may be determined that scale cleaning processing is necessary when operating time of the water treatment device 10 reaches a reference time period set in advance. These types of determination processing are specific examples of determination means.

If it is determined that scale cleaning processing is necessary, scale cleaning processing is performed by the control device. In the scale cleaning processing a carbon dioxide gas is mixed into the water by the gas supply section 13 to supply the carbon dioxide gas to the scale isolation section 16. Also, in order to smoothly deliver carbon dioxide from the gas supply section 13 to the scale isolation section 16, for example, the water intake pump 12 is actuated at a low speed to flow a small amount of water from the upstream side toward the downstream side of the water intake piping 11. Also, according to the invention, the gas supply section 13 provides cleaning means for cleaning the scale isolation section 16. Also, in the scale cleaning processing, the channel changeover valve 17 is flipped to connect a part of the water intake piping 11, the part being on the upstream side relative to the tank connection portion 11A, to the water discharge piping 18 and disconnect the tank connection portion 11A from the water discharge piping 18.

Upon the supply of carbon dioxide to the scale isolation section 16 as described above, the scale isolation section 16 is maintained to have an acidic atmosphere. As a result, the scale accumulated in the scale isolation section 16 is re-dissolved and removed from the scale isolation section 16. In other words, taking calcium carbonate as an example of the scale, calcium carbonate accumulated in the scale isolation section 16 is re-dissolved in the presence of carbon dioxide according to the reaction formula in Formula 2 below, and thus dissolved into the water in the form of calcium ions. Then, the water with scale components dissolved therein is discharged to the reheating return piping 6 via the channel changeover valve 17 and the water discharge piping 18. As described above, the present embodiment enables easy discharge of wastewater resulting from cleaning of the scale isolation section 16 via the channel changeover valve 17 and the water discharge piping 18 and thus enables provision of the water treatment device 10 with high maintainability.

[Formula 2] CaCo₃+Co₂+H₂O → 2Ca⁺+2HCO₃⁻

With the above-described configuration, performance of the determination processing enables the scale cleaning processing to be performed only when cleaning of scale accumulated in the scale isolation section 16 is necessary. Consequently, a frequency of scale cleaning processing can be restrained to the minimum necessary, enabling enhancing the maintainability of the water treatment device 10 while avoiding excessive scale accumulation. Also, with the configuration according to the invention, the scale isolation section 16 is cleaned using the gas supply section 13, which is to be used for descaling treatment, without using, e.g., a dedicated carbon dioxide supply source. Therefore, a function of the scale cleaning processing can be provided without complication of the configuration of the water treatment device 10. Here, in order to enhance the efficiency of reaction when scale is re-dissolved, it is according to the invention to mix a larger amount of carbon dioxide compared to that for the descaling treatment into the water from the gas supply section 13. Also, for reasons that are similar to those in the case of the descaling treatment, carbon dioxide is preferably in the form of microbubbles each having a size of no more than 1 µm.

Although the above-described configuration example indicates, as an example, a case where the gas supply section 13 is used as cleaning means, the present invention is not limited to this case, and a configuration in which a dedicated carbon dioxide supply source is provided separately from the gas supply section 13 to, at the time of descaling treatment being performed, supply carbon dioxide from this carbon dioxide supply source to the scale isolation section 16 may be employed. In this case, at the time of supply of carbon dioxide, it is preferable to stop the flow of water from the hot-water storage tank 2 into the water treatment device 10 to prevent the water from flowing into the scale reaction section 15. In order to stop the inflow of the water, for example, a shutoff valve or the like that is opened/closed by the control device may be provided on the upstream side of the scale reaction section 15 to shut off the water flow by means of the shutoff valve.

### (Cleaning liquid supply device)

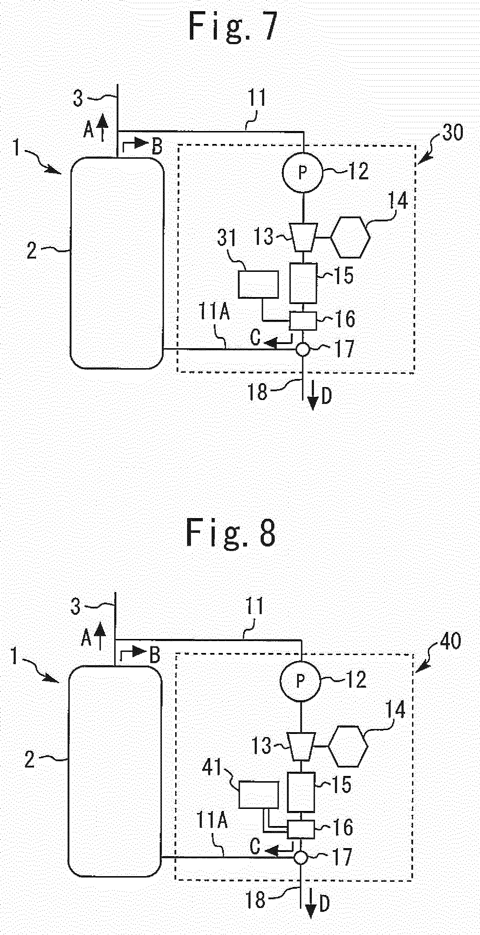

Next, as another configuration for performing scale cleaning processing, a case where an acid substance for re-dissolving scale is used will be described. Figure 7 is an enlarged major part view illustrating a second alteration of Embodiment 1 of the present invention in which a cleaning liquid supply device is installed in a water treatment device. A water treatment device 30 illustrated in this figure is configured to perform scale cleaning processing using the characteristic of scale, which is a carbonate compound, dissolving in an acidic area, and includes a cleaning liquid supply device 31 that supplies, for example, a cleaning liquid containing an acid substance to the scale isolation section 16. The cleaning liquid supply device 31 is configured to be controlled by a control device, and provides cleaning means for cleaning a scale isolation section 16.

Then, in the scale cleaning processing, in a state in which a flow of water from a hot-water storage tank 2 to the water treatment device 30 is stopped, a cleaning liquid is supplied from the cleaning liquid supply device 31 to the scale isolation section 16. Consequently, the scale isolation section 16 is maintained to have an acidic atmosphere and accumulated scale is re-dissolved. Then, water with the scale re-dissolved therein is discharged to a reheating return piping 6 via a channel changeover valve 17 and a water discharge piping 18. As described above, where the cleaning liquid supply device 31 is used as cleaning means, also, the scale isolation section 16 can be cleaned.

Also, when scale cleaning processing is performed where the water treatment device 10 has a configuration in which a scale reaction section 15 and an electrode reactive separator 16C are integrated, a method in which a direction of application of a voltage between electrodes 16c and 16d is reversed relative to that in the case of descaling treatment is also effective. With this method, from among the electrodes 16c and 16d, an electrode that serves as a cathode in descaling treatment, that is, an electrode with scale accumulated thereon serves as an anode, and thus the accumulated scale can be re-dissolved and removed. In addition, when descaling treatment is resumed after end of the scale cleaning processing, a voltage of a magnitude that is the same as that of the scale cleaning processing is applied in a direction opposite to that of the scale cleaning processing, enabling restraint of deterioration of the electrodes 16c and 16d and thus enabling extension of the lives of the electrodes.

### (Ultrasonic shaking device)

Next, as another configuration for performing scale cleaning processing, a case where ultrasonic shaking is used will be described. Figure 8 is an enlarged major part view of a third alteration of Embodiment 1 of the present invention in which an ultrasonic shaking device is installed in a water treatment device. A water treatment device 40 described in this figure includes an ultrasonic shaking device 41 that serves as cleaning means. The ultrasonic shaking device 41 is configured to be controlled by a control device, and has a function that subjects a scale isolation section 16 to micro vibration (ultrasonic shaking). A strength of the shaking generated by the ultrasonic shaking device 41 is determined according to, e.g., constituent materials, a structure and a strength of the scale isolation section 16.

In scale cleaning processing, the ultrasonic shaking device 41 is actuated by the control device to cause micro vibration of the scale isolation section 16. As a result, scale accumulated in the scale isolation section 16 is subjected to the micro vibration, floats from a wall surface of the scale isolation section 16 and is suspended in water. The suspended scale is discharged to a reheating return piping 6 via a channel changeover valve 17 and a water discharge piping 18, enabling cleaning of the scale isolation section 16.

In Embodiment 1, the water intake pump 12 is indicated as an example of means for introducing water in the hot-water storage tank 2 into the water treatment device 10.

The water intake pump 12 is disposed on the upstream side of the scale isolation section 16.

Also, Embodiment 1 indicates, as an example, a case where the water discharge piping 18 is connected to the reheating return piping 6 to discharge wastewater after cleaning, which has been obtained as a result scale cleaning processing, to the reheating return piping 6. This configuration enables wastewater after cleaning to flow from the reheating return piping 6 into the bathtub 9 and thus enables, e.g., a user to easily dispose of the wastewater accumulated in the bathtub 9 by draining the wastewater. Therefore, scale cleaning processing can efficiently be performed using the existing pipings installed in the hot-water supply device 1, enabling enhancement in maintainability of the hot-water supply device 1.

On the other hand, in the present invention, a destination of connection of the water discharge piping 18 is not limited to the reheating return piping 6. In other words, the water discharge piping 18 may be connected to a piping other than the reheating return piping 6 or may be configured to be connectable to, e.g., a dedicated wastewater container or a wastewater facility. More specifically, the water discharge piping 18 may be connected to, for example, the reheating supply piping 5, and this connection also enables provision of effects that are similar to those provided where the water discharge piping 18 is connected to the reheating return piping 6.

Also, in Embodiment 1, it is preferable that when operation other than descaling treatment and scale cleaning processing is performed, the water intake piping 11 is disconnected from the water discharge piping 18 by the channel changeover valve 17 to maintain the water discharge piping 18 dead-ended. Consequently, for example, even when reheating operation is performed and bath water is circulated through the reheating supply piping 5 and the reheating return piping 6, a reverse flow of the bath water into, e.g., the scale isolation section 16 can be prevented.

As described in detail above, the present embodiment enables scale components contained in water that is dealt with by the hot-water supply device 1 to be efficiently removed by the water treatment device 10. Consequently, scale adherence and accumulation in parts that are necessary for maintaining a function of the hot-water supply device 1, that is, parts to be protected from scale such as the hot-water storage tank 2, the heat exchanger 4, the reheating supply piping 5 and the reheating return piping 6 can stably be restrained. In addition, in the present embodiment, no acidification of the water is performed to maintain the state of scale components dissolved in water, and thus, even if the water quality or the water temperature varies, scale can be avoided from being deposited in unexpected parts. Therefore, in particular, in the hot-water supply device 1, deterioration in performance of the heat exchanger 4 and decrease in hot water supply efficiency due to adherence of scale to, e.g., the heat exchanger 4 are restrained, enabling the function of the hot-water supply device 1 to be stably fulfilled.

Embodiment 1 indicates the configurations of the reaction tank 15A and the reaction channel 15B as examples of the scale reaction section 15, and also indicates the configurations of the filter 16A, the heating separator 16B and the electrode reactive separator 16C as examples of the scale isolation section 16, and also indicates the configurations of the bubble breaking device 21, the cleaning liquid supply device 31 and the ultrasonic shaking device 41 as, e.g., the first to third alterations. The present disclosure includes a system including a combination of some of the configurations that can be combined from among these configurations, and a system including a combination of all of the above-indicated configurations.

Also, Embodiment 1 indicates, as examples, the respective cases where the water treatment devices 10, 20, 30 and 40 are employed in the hot-water supply device 1. However, the present invention is applicable not only to hot-water supply devices, but is also applicable to heating apparatuses including a floor heating system using hot water and washing machines.

### Reference Signs List

1 hot-water supply device, 2 hot-water storage tank (facility), 3 hot water supply piping, 4 heat exchanger, 5 reheating supply piping (reheating piping), 6 reheating return piping (reheating piping), 7 reheating pump, 8 hot water faucet, 9 bathtub, 10, 20, 30, 40 water treatment device, 11 water intake piping (water intake circuit), 11A tank connection portion, 12 water intake pump (water intake circuit), 13 gas supply section (cleaning means), 14 gas container, 15 scale reaction section, 15A reaction tank, 15B reaction channel, 16 scale isolation section, 16A filter, 16B heating separator, 16C electrode reactive separator, 17 channel changeover valve (water discharge means), 18 water discharge piping (water discharge means), 21 bubble breaking device (bubble breaking means), 31 cleaning liquid supply device (cleaning means), 41 ultrasonic shaking device (cleaning means).

## Claims

1. A water treatment device (10, 20) comprising:
a water intake circuit (11) having a function that takes water out from a hot water storage tank (2) and returns the water to the hot water storage tank (2), the water intake circuit (11) allowing the water stored in the hot water storage tank (2) to circulate therethrough;
a water intake pump (12) configured to make the water circulate through the water intake circuit (11);
a gas supply section (13) that supplies a gas containing carbon dioxide to the water flowing in the water intake circuit (11) and lowers a pH of the water; and
a scale isolation section (16) that is provided on a downstream side of the gas supply section (13) in a direction of the flow of the water in the water intake circuit (11) and isolates scale deposited in the water flowing in the water intake circuit (11) as a result of the supply of the gas;
determination means for determining whether or not cleaning processing for cleaning the scale accumulated in the scale isolation section (16) is necessary;
cleaning means for, if the determination means determines that the cleaning processing is necessary, performing the cleaning processing, a channel changeover valve (17) connected to a tank connecting portion (11A) interconnecting the channel changeover valve (17) and the lower side of the hot water storage tank (2) and a water discharging piping (18), the channel changeover valve (17) being configured to switch a channel of water that has flown out from the scale isolation section (16), to either of the tank connection portion (11A) and the water discharge piping (18), and
a control device connected with the determination means, the gas supply section (13), the water intake pump (12) and the channel changeover valve (17),
**characterized in that**
the cleaning means includes the gas supply section (13); and
the control device is configured to control the scale cleaning processing so that, while the cleaning processing is being performed, the gas supply section (13) supplies the gas containing carbon dioxide to water flowing into the scale isolation section (16) so as to re-dissolve the scale accumulated in the scale isolation section (16), wherein an amount of carbon dioxide, which is supplied from the gas supply section (13) into the water, is increased compared to an amount of carbon dioxide during a descaling treatment and so that, in cleaning processing, the channel changeover valve (17) is flipped to connect the part of the water intake circuit (11) being on the upstream part relative to the tank connecting portion (11A), to the water discharge piping (18) and disconnect the tank connecting portion (11A) from the water discharge piping (18),
wherein, in the water intake circuit (11), a scale reaction section (15) for making the water flowing in the water intake circuit (11) and the gas react with each other to deposit scale in the water, the scale reaction section (15) being disposed between the gas supply section (13) and the scale isolation section (16), is provided, and
wherein the gas supplied from the gas supply section (13) is introduced into the water intake circuit (11) via a microbubble generation device that makes a gas into microbubbles.

2. The water treatment device (10, 20) according to claim 1, wherein the scale reaction section (15) includes a reaction tank (15A) that temporarily retains a mixture of the water and the gas.

3. The water treatment device (10, 20) according to claim 1 or 2, wherein the scale reaction section (15) includes a reaction channel (15B) that includes a helically-curved channel and allows a mixture of the water and the gas to flow therethrough.

4. The water treatment device (20) according to any one of claims 1 to 3, comprising bubble breaking means (21) for breaking a bubble contained in the water that has flowed out from the scale isolation section (16), the bubble breaking means (21) being provided in a part of the water intake circuit (11) on a downstream side of the scale isolation section (16), the part returning descaled water to the facility (2)

5. The water treatment device (10, 20) according to any one of claims 1 to 4, comprising a scale detector that detects a scale accumulation amount of scale accumulated in the scale isolation section (16),
wherein if the scale accumulation amount detected by the scale detector exceeds an upper-limit determination value set in advance, the determination means determines that the cleaning processing is necessary.

6. The water treatment device (10, 20) according to any one of claims 1 to 4, wherein when operating time of the water treatment device (10, 20, 30, 40) reaches a reference time period set in advance, the determination means determines that the cleaning processing is necessary.

7. A hot-water supply device (1) comprising:
a water treatment device (10, 20) according to any one of claims 1 to 6;
a hot-water storage tank (2) that is included in the facility (2) and stores hot water; and
a hot water supply piping (3) that supplies the hot water stored in the hot-water storage tank (2) to the outside.

8. A hot-water supply device (1) comprising:
a water treatment device (10, 20) according to any one of claims 1 to 6;
a hot-water storage tank (2) that is included in the facility (2) and stores hot water;
a hot water supply piping (3) that supplies the hot water stored in the hot-water storage tank (2) to an outside;
a heat exchanger (4) for heating bath water using the hot water stored in the hot-water storage tank (2);
a reheating piping (5, 6) that circulates the bath water between the heat exchanger (4) and a bathtub (9); and
water discharge means (17, 18) for, upon cleaning processing for cleaning the scale accumulated in the scale isolation section (16) of the water treatment device (10, 20) being performed, discharging wastewater that has flowed out from the scale isolation section (16) via the reheating piping (5, 6) and the bathtub

9. A heating apparatus including a floor heating system using hot water and washing machines comprising:
a water treatment device (10, 20) according to any one of claims 1 to 6.

## Patentansprüche

1. Wasserbehandlungseinrichtung (10, 20), umfassend:
einen Wasserzulaufkreislauf (11), aufweisend eine Funktion, die Wasser aus einem Warmwasserspeichertank (2) entnimmt und das Wasser in den Warmwasserspeichertank (2) zurückführt, wobei der Wasserzulaufkreislauf (11) ermöglicht, das im Warmwasserspeichertank (2) gespeicherte Wasser durch diesen hindurch zu zirkulieren;
eine Wasserzulaufpumpe (12), die eingerichtet ist, das Wasser zu veranlassen, durch den Wasserzulaufkreislauf (11) zu zirkulieren;
einen Gaszufuhrabschnitt (13), der ein kohlendioxidhaltiges Gas dem im Wasserzulaufkreislauf (11) strömenden Wasser zuführt und einen pH-Wert des Wassers senkt; und
einen Kesselsteinabtrennungsabschnitt (16), der auf einer stromabwärtigen Seite des Gaszufuhrabschnitts (13) in einer Richtung der Strömung des Wassers im Wasserzulaufkreislauf (11) vorgesehen ist und Kesselstein abtrennt, der sich in dem im Wasserzulaufkreislauf (11) strömenden Wasser infolge der Zufuhr des Gases ablagert;
ein Bestimmungsmittel zum Bestimmen, ob oder ob nicht eine Reinigungsbearbeitung zum Reinigen des im Kesselsteinabtrennungsabschnitt (16) angesammelten Kesselsteins notwendig ist;
ein Reinigungsmittel, zum, falls das Bestimmungsmittel bestimmt, dass die Reinigungsbearbeitung notwendig ist, Durchführen der Reinigungsbearbeitung, ein Kanalumschaltventil (17), das mit einem Tankverbindungsabschnitt (11A) verbunden ist, der das Kanalumschaltventil (17) und die untere Seite des Warmwasserspeichertanks (2) und eine Wasserabgabeleitung (18) miteinander verbindet, wobei das Kanalumschaltventil (17) eingerichtet ist, einen Kanal von Wasser, das aus dem Kesselsteinabtrennungsabschnitt (16) heraus geströmt ist, auf eines von dem Tankverbindungsabschnitt (11A) und der Wasserabgabeleitung (18) zu schalten, und
eine Steuerungseinrichtung, die mit dem Bestimmungsmittel, dem Gaszufuhrabschnitt (13), der Wasserzulaufpumpe (12) und dem Kanalumschaltventil (17) verbunden ist,
**dadurch gekennzeichnet, dass**
das Reinigungsmittel den Gaszufuhrabschnitt (13) aufweist; und
die Steuerungseinrichtung eingerichtet ist, die Kesselsteinreinigungsbearbeitung zu steuern, so dass, während die Reinigungsbearbeitung durchgeführt wird, der Gaszufuhrabschnitt (13) das kohlendioxidhaltige Gas dem Wasser zuführt, das in den Kesselsteinabtrennungsabschnitt (16) hinein strömt, um den im Kesselsteinabtrennungsabschnitt (16) angesammelten Kesselstein wieder aufzulösen, wobei eine Kohlendioxidmenge, die vom Gaszufuhrabschnitt (13) in das Wasser zugeführt wird, im Vergleich zu einer Kohlendioxidmenge während einer Kesselsteinentfernungsbehandlung erhöht ist, und so dass bei der Reinigungsbearbeitung das Kanalumschaltventil (17) umgelegt wird, um den Teil des Wasserzulaufkreislaufs (11), der sich am stromaufwärtigen Teil in Bezug auf den Tankverbindungsabschnitt (11A) befindet, mit der Wasserabgabeleitung (18) zu verbinden und den Tankverbindungsabschnitt (11 A) von der Wasserabgabeleitung (18) zu trennen,
wobei im Wasserzulaufkreislauf (11) ein Kesselsteinreaktionsabschnitt (15) vorgesehen ist, um das im Wasserzulaufkreislauf (11) strömende Wasser und Gas zu veranlassen, miteinander zu reagieren, um Kesselstein im Wasser abzulagern, wobei der Kesselsteinreaktionsabschnitt (15) zwischen dem Gaszufuhrabschnitt (13) und dem Kesselsteinabtrennungsabschnitt (16) angeordnet ist, und
wobei das aus dem Gaszufuhrabschnitt (13) zugeführte Gas über eine Mikroblasen-Erzeugungseinrichtung, die ein Gas in Mikroblasen umwandelt, in den Wasserzulaufkreislauf (11) eingeleitet wird.

2. Wasserbehandlungseinrichtung (10, 20) nach Anspruch 1, wobei der Kesselsteinreaktionsabschnitt (15) einen Reaktionstank (15A) aufweist, der eine Mischung aus dem Wasser und dem Gas temporär zurückhält.

3. Wasserbehandlungseinrichtung (10, 20) nach Anspruch 1 oder 2, wobei der Kesselsteinreaktionsabschnitt (15) einen Reaktionskanal (15B) aufweist, der einen wendelförmig gebogenen Kanal aufweist und gestattet, eine Mischung aus dem Wasser und dem Gas durch diesen hindurchströmen zu lassen.

4. Wasserbehandlungseinrichtung (20) nach einem der Ansprüche 1 bis 3, umfassend ein Blasenaufbrechungsmittel (21) zum Aufbrechen einer Blase, die in dem Wasser enthalten ist, das aus dem Kesselsteinabtrennungsabschnitt (16) heraus geströmt ist, wobei das Blasenaufbrechungsmittel (21) in einem Teil des Wasserzulaufkreislaufs (11) auf einer stromabwärtigen Seite des Kesselsteinabtrennungsabschnitts (16) vorgesehen ist, wobei dieser Teil von Kesselstein befreites Wasser zur Anlage (2) zurückführt.

5. Wasserbehandlungseinrichtung (10, 20) nach einem der Ansprüche 1 bis 4, umfassend einen Kesselsteindetektor, der eine im Kesselsteinabtrennungsabschnitt (16) angesammelte Kesselsteinansammlungsmenge detektiert, wobei, falls die durch den Kesselsteindetektor detektierte Kesselsteinansammlungsmenge einen im Voraus eingestellten Obere-Grenze-Bestimmungswert überschreitet, das Bestimmungsmittel bestimmt, dass die Reinigungsbearbeitung notwendig ist.

6. Wasserbehandlungseinrichtung (10, 20) nach einem der Ansprüche 1 bis 4, wobei, wenn die Betriebszeit der Wasserbehandlungseinrichtung (10, 20, 30, 40) eine im Voraus eingestellte Referenzzeitdauer bestimmt, das Bestimmungsmittel bestimmt, dass die Reinigungsbearbeitung notwendig ist.

7. Warmwasserzufuhreinrichtung (1), umfassend:
eine Wasserbehandlungseinrichtung (10, 20) nach einem der Ansprüche 1 bis 6;
einen Warmwasserspeichertank (2), der in der Anlage (2) enthalten ist und Warmwasser speichert; und
eine Warmwasserzufuhrleitung (3), die das im Warmwasserspeichertank (2) gespeicherte Warmwasser nach Außen zuführt.

8. Warmwasserzufuhreinrichtung (1), umfassend:
eine Wasserbehandlungseinrichtung (10, 20) nach einem der Ansprüche 1 bis 6;
einen Warmwasserspeichertank (2), der in der Anlage (2) enthalten ist und Warmwasser speichert; und
eine Warmwasserzufuhrleitung (3), die das im Warmwasserspeichertank (2) gespeicherte Warmwasser nach Außen zuführt,
einen Wärmetauscher (4) zum Erwärmen von Badwasser unter Verwendung des im Warmwasserspeichertank (2) gespeicherten Warmwassers;
eine Wiedererwärmungsleitung (5, 6), die das Badwasser zwischen dem Wärmetauscher (4) und einer Wanne (9) zirkuliert; und
ein Wasserabgabemittel (17, 18), zum, bei Durchführung einer Reinigungsbearbeitung zur Reinigung des im Kesselsteinabtrennungsabschnitt (16) der Wasserbehandlungseinrichtung (10, 20) angesammelten Kesselsteins, Abgeben von Abwasser, das aus dem Kesselsteinabtrennungsabschnitt (16) Über die Wiedererwärmungsleitung (5, 6) und die Badewanne heraus geströmt ist.

9. Erwärmungsvorrichtung, aufweisend ein Fußbodenerwärmungssystem, das Warmwasser verwendet, und Waschmaschinen, umfassend:
eine Wasserbehandlungseinrichtung (10, 20) nach einem der Ansprüche 1 bis 6.

## Revendications

1. Dispositif de traitement d'eau (10, 20) comprenant :
un circuit d'admission d'eau (11) qui a pour fonction de sortir de l'eau d'un réservoir de stockage d'eau chaude (2) et de renvoyer l'eau vers le réservoir de stockage d'eau chaude (2), le circuit d'admission d'eau (11) permettant à l'eau stockée dans le réservoir de stockage d'eau chaude (2) de circuler à l'intérieur ;
une pompe d'admission d'eau (12) configurée pour faire circuler l'eau dans le circuit d'admission d'eau (11) ;
une section d'alimentation en gaz (13) qui fournit un gaz qui contient du dioxyde de carbone à l'eau qui circule dans le circuit d'admission d'eau (11) et réduit le pH de l'eau ; et
une section d'isolation du tartre (16) qui est prévue sur un côté aval de la section d'alimentation en gaz (13) dans une direction d'écoulement de l'eau dans le circuit d'admission d'eau (11) et isole le tartre déposé dans l'eau qui circule dans le circuit d'admission d'eau (11) à la suite de l'alimentation en gaz ;
un moyen de détermination destiné à déterminer si un nettoyage destiné à éliminer le tartre accumulé dans la section d'isolation du tartre (16) est nécessaire ou non ;
un moyen de nettoyage destiné à, si le moyen de détermination détermine que le nettoyage est nécessaire, procéder au nettoyage, une soupape de changement de canal (17) reliée à une partie de raccordement au réservoir (11A) qui relie la soupape de changement de canal (17) et le côté inférieur du réservoir de stockage d'eau chaude (2), et une conduite d'évacuation de l'eau (18), la soupape de changement de canal (17) étant configurée pour commuter un canal d'eau qui est sortie de la section d'isolation du tartre (16) sur n'importe laquelle de la partie de raccordement au réservoir (11A) et de la conduite d'évacuation de l'eau (18), et
un dispositif de commande relié au moyen de détermination, à la section d'alimentation en gaz (13), à la pompe d'admission d'eau (12) et à la soupape de changement de canal (17),
**caractérisé en ce que**
le moyen de nettoyage comprend la section d'alimentation en gaz (13) ; et
le dispositif de commande est configuré pour contrôler le nettoyage du tartre de sorte que, pendant le nettoyage, la section d'alimentation en gaz (13) fournisse le gaz qui contient le dioxyde de carbone à l'eau qui circule dans la section d'isolation du tartre (16) de façon à redissoudre le tartre accumulé dans la section d'isolation du tartre (16), dans lequel une quantité de dioxyde de carbone, qui est fournie par la section d'alimentation en gaz (13) à l'eau, est augmentée en comparaison avec une quantité de dioxyde de carbone pendant un détartrage, et de sorte que, pendant le nettoyage, la soupape de changement de canal (17) soit inversée afin de relier la partie du circuit d'admission d'eau (11) qui se trouve sur la partie amont par rapport à la partie de raccordement au réservoir (11A) à la conduite d'évacuation de l'eau (18), et de débrancher la partie de raccordement au réservoir (11A) de la conduite d'évacuation de l'eau (18),
dans lequel le circuit d'admission d'eau (11) contient une section de réaction avec le tartre (15) destinée à faire circuler l'eau dans le circuit d'admission d'eau (11) et à faire réagir le gaz avec celle-ci afin de déposer du tartre dans l'eau, la section de réaction avec le tartre (15) étant disposée entre la section d'alimentation en gaz (13) et la section d'isolation du tartre (16), et
dans lequel le gaz fourni par la section d'alimentation en gaz (13) est introduit dans le circuit d'admission d'eau (11) via un dispositif de génération de microbulles qui transforme un gaz en microbulles.

2. Dispositif de traitement d'eau (10, 20) selon la revendication 1, dans lequel la section de réaction avec le tartre (15) comprend un réservoir de réaction (15A) qui conserve temporairement un mélange d'eau et de gaz.

3. Dispositif de traitement d'eau (10, 20) selon la revendication 1 ou 2, dans lequel la section de réaction avec le tartre (15) comprend un canal de réaction (15B) qui comprend un canal de forme hélicoïdale et permet à un mélange d'eau et de gaz de circuler à l'intérieur.

4. Dispositif de traitement d'eau (20) selon l'une quelconque des revendications 1 à 3, comprenant un moyen de rupture de bulles (21) destiné à rompre une bulle contenue dans l'eau qui est sortie de la section d'isolation du tartre (16), le moyen de rupture de bulles (21) étant prévu dans une partie du circuit d'admission d'eau (11) sur un côté aval de la section d'isolation du tartre (16), la partie renvoyant l'eau détartrée vers l'installation (2).

5. Dispositif de traitement d'eau (10, 20) selon l'une quelconque des revendications 1 à 4, comprenant un détecteur de tartre qui détecte une quantité d'accumulation de tartre accumulée dans la section d'isolation du tartre (16),
dans lequel, si la quantité d'accumulation de tartre détectée par le détecteur de tartre dépasse une valeur de détermination de limite supérieure définie à l'avance, le moyen de détermination détermine que le nettoyage est nécessaire.

6. Dispositif de traitement d'eau (10, 20) selon l'une quelconque des revendications 1 à 4, dans lequel, lorsque la durée de fonctionnement du dispositif de traitement d'eau (10, 20, 30, 40) atteint une durée de référence définie à l'avance, le moyen de détermination détermine que le nettoyage est nécessaire.

7. Dispositif d'alimentation en eau chaude (1) comprenant :
un dispositif de traitement d'eau (10, 20) selon l'une quelconque des revendications 1 à 6 ;
un réservoir de stockage d'eau chaude (2) qui est inclus dans l'installation (2) et qui stocke de l'eau chaude ; et
une conduite d'alimentation en eau chaude (3) qui fournit l'eau chaude stockée dans le réservoir de stockage d'eau chaude (2) à l'extérieur.

8. Dispositif d'alimentation en eau chaude (1) comprenant :
un dispositif de traitement d'eau (10, 20) selon l'une quelconque des revendications 1 à 6 ;
un réservoir de stockage d'eau chaude (2) qui est inclus dans l'installation (2) et qui stocke de l'eau chaude ;
une conduite d'alimentation en eau chaude (3) qui fournit l'eau chaude stockée dans le réservoir de stockage d'eau chaude (2) à l'extérieur ;
un échangeur thermique (4) destiné à chauffer une eau de bain à l'aide de l'eau chaude stockée dans le réservoir de stockage d'eau chaude (2) ;
une conduite de réchauffage (5, 6) qui fait circuler l'eau de bain entre l'échangeur thermique (4) et une baignoire (9) ; et
un moyen d'évacuation de l'eau (17, 18) destiné à, lors du nettoyage destiné à éliminer le tartre accumulé dans la section d'isolation du tartre (16) du dispositif de traitement d'eau (10, 20), évacuer les eaux usées qui sont sorties de la section d'isolation du tartre (16) via la conduite de réchauffage (5, 6) et la baignoire.

9. Appareil de chauffage qui comprend un système de chauffage par le sol qui utilise de l'eau chaude et des machines à laver comprenant :
un dispositif de traitement d'eau (10, 20) selon l'une quelconque des revendications 1 à 6.
